# EUROPÄISCHE PATENTANMELDUNG

(11) **EP 1 417 881 A1**
(43) Veröffentlichungstag der Anmeldung: **12.05.2004**
(21) Anmeldenummer: 03024673.0
(22) Anmeldetag: 28.10.2003
(51) Int. Cl.: A01G 13/00, F16B 2/02

(54) **Vorrichtung zur Firstfixierung eines Schutznetzes**

(30) Priorität: 10.11.2002 DE 10252468
(71) Anmelder: BayWa Aktiengesellschaft, 81925 München (DE)
(72) Erfinder: Holzwarth, Rudolf, 88255 Baindt (DE)
(74) Vertreter: Pfiz, Thomas, Dr.

(57) **Zusammenfassung**

Die Erfindung betrifft eine Vorrichtung zur Firstfixierung eines Schutznetzes (14) für Pflanzenkulturen, mit an einem Firstdraht (12) einer Netzunterkonstruktion (10) im Abstand voneinander angeordneten Verbindungsmitteln (18), wobei die Verbindungsmittel (18) jeweils durch ein den Firstdraht (12) zumindest teilweise ummantelndes Innenteil (22) und ein unter Zwischenklemmen des Schutznetzes (14,24) auf das Innenteil (22) aufsetzbares Außenteil (26) gebildet sind.

## Beschreibung

Die Erfindung betrifft eine Vorrichtung zur Firstfixierung eines Schutznetzes für Pflanzenkulturen.

Solche Schutznetze werden an Firstdrähten einer Netzunterkonstruktion dachartig aufgespannt, um Pflanzenkulturen vor allem gegen Hagel zu schützen. Dabei werden die bahnförmigen Schutznetze über parallelen Pflanzreihen mittig entlang der Firstdrähte aufgehängt und an ihren einander zugewandten Längs- bzw. Traufrändern über geeignete Netzverbinder miteinander verbunden, wie es in der DE 19737228 offenbart ist. Nach der Ernte werden die Traufverbindungen üblicherweise wieder gelöst, insbesondere um eine Schneelastgefährdung zu vermeiden. Zu diesem Zweck ist es bekannt, die Schutznetze an den Firstdrähten hochzuraffen und in bestimmten Abständen zu sichern, beispielsweise indem der Netzwulst mit Gummizügen oder Schnüren hochgebunden wird, was allerdings auch aufgrund der Höhe der Firstdrähte arbeitsaufwendig ist. Ein weiteres Problem stellen Netzbewegungen insbesondere durch Windeinfluss dar, die zu Beschädigungen führen können. Vor allem im Bereich der Bindestellen können erhöhte Beanspruchungen auftreten, weil dort erhebliche Kräfte eingeleitet werden, die bei Schnee- oder Eislast in dem dazwischenhängenden Netzmaterial noch verstärkt werden.

Ausgehend hiervon liegt der Erfindung die Aufgabe zugrunde, die im Stand der Technik aufgetretenen Nachteile zu vermeiden und eine Verbindungsvorrichtung der eingangs angegebenen Art zu verbessern, so dass die Lebensdauer der Schutznetze erhöht werden kann und eine Winterumrüstung in arbeitseffizienter Weise möglich ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, Reibungsbeanspruchungen auf dem Firstdraht zu minimieren. Dementsprechend wird erfindungsgemäß vorgeschlagen, daß entlang der Firstdrähte einer Netzunterkonstruktion Verbindungsmittel im Abstand voneinander angeordnet sind, wobei die Verbindungsmittel jeweils durch ein den jeweiligen Firstdraht zumindest teilweise ummantelndes Innenteil und ein unter Zwischenklemmen des Schutznetzes auf das Innenteil aufsetzbares Außenteil gebildet sind. Dadurch ist es möglich, Scheuerbewegungen des Schutznetzes auf dem Firstdraht weitgehend zu vermeiden und das Schutznetz an Fixier- bzw. Bindestellen ohne Drahtkontakt zu lagern, so dass Beanspruchungen erheblich reduziert werden.

Vorteilhafterweise ist das Innenteil an den Firstdraht umfangsseitig ansetzbar und vorzugsweise über eine Klemmverbindung verdreh- und verschiebefest mit diesem verbindbar. Durch das radiale Ansetzen können die Innenteile problemlos an dem aufgespannten Firstdraht montiert werden, wobei speziell durch eine Klemmverbindung der Montageaufwand gering bleibt.

Eine weitere Verbesserung in dieser Hinsicht lässt sich dadurch erreichen, dass das Innenteil durch einen an seinen Längsrändern reihenförmig mit Verschlusszähnen versehenen Klemmstreifen gebildet ist, wobei die Verschlusszähne des klemmend um den Firstdraht umbiegbaren Klemmstreifens reißverschlussartig miteinander in Eingriff bringbar sind.

Für eine einfache Verbindung mit dem Außenteil ist es vorteilhaft, wenn das Innenteil vorzugsweise an seinen Verschlusszähnen abstehende Rastorgane aufweist, und wenn die Rastorgane unter Durchdringung des Schutznetzes mit dem Außenteil verrastbar sind.

Eine weitere bevorzugte Ausführung sieht vor, dass das Außenteil eine durchgehende Aufnahmenut zum vorzugsweise radialen Aufstecken auf das an dem Firstdraht befestigte Innenteil aufweist.
Dabei kann die lagefeste Fixierung auch des Innenteils dadurch verbessert werden, dass die Aufnahmenut beim Einführen des Innenteils unter Ausübung einer Klemmkraft elastisch aufweitbar ist.

Um die Verbindung in schonender Weise herzustellen, ist es günstig, wenn die Nutflanken der Aufnahmenut randseitig glatt nach außen gekrümmt sind, und wenn die Aufnahmenut einen im Querschnitt C-förmigen Nutgrund aufweist.

Zur weiteren Verringerung des Montageaufwands ist es vorteilhaft, wenn das Außenteil über eine Rastverbindung mit dem Innenteil verbindbar ist. Dies kann vorteilhaft dadurch erfolgen, dass die Aufnahmenut des Außenteils mit Rastvertiefungen für den Eingriff von an dem Innenteil abstehenden Rastorganen versehen ist.

Eine weitere Reduzierung der Netzbeanspruchung an den Verbindungsstellen wird dadurch erreicht, dass zwischen Außenteil und Innenteil das Schutznetz durchgreifende Abstandshalter angeordnet sind.

Gemäß einer weitere bevorzugten Ausgestaltung der Erfindung ist das Außenteil mit vorzugsweise durch zwei Seilkanäle gebildeten Haltemitteln für ein zum Raffen des Schutznetzes vorgesehenes Bindeseil versehen. Damit kann das Hochbinden des Netzes vereinfacht werden und zugleich die Netzbeanspruchung an den Bindestellen minimiert werden.

Eine weitere Verbesserung wird dadurch erreicht, dass das Außenteil einen seitlich offenen Seilkanal zur lösbaren Halterung eines Seilendes eines das Schutznetz umschlingenden Bindeseils aufweist. Um die Seilverbindung leicht herstellen und auch wieder lösen zu können, ist es von Vorteil, wenn der seitlich offene Seilkanal eine vorzugsweise stufenförmige Querschnittsverengung zur zugsicheren Abstützung eines Seilknotens des Bindeseils aufweist.

Herstellungstechnisch ist es vorteilhaft, wenn das Innenteil und/oder das Außenteil als Formteil, insbesondere als Spritzgussteil aus Kunststoff ausgebildet sind. Durch die vorteilhafte Materialwahl kann auch die Reibungsbelastung verringert werden. In diesem Sinne ist es weiter günstig, wenn das Bindeseil aus Kunststofffasern besteht.

Um Querverschiebungen des Schutznetzes weitgehend auszuschließen, ist es vorteilhaft, wenn das Schutznetz einen durch eine im Abstand parallel zu dem Firstdraht verlaufende Firstnaht gebildeten, den Firstdraht und die darauf befestigten Innenteile umhüllenden Firstsaum aufweist.

Zur Herstellung eines optimalen Nahtverlaufs ist es von Vorteil, wenn das Innenteil zumindest in seinem den Firstdraht umschließenden Bereich aus einem Flachmaterial besteht.

Im folgenden wird die Erfindung anhand eines in der Zeichnung in schematischer Weise dargestellten Ausführungsbeispiels näher erläutert. Es zeigen
- Fig. 1: ein auf einer Netzunterkonstruktion an Bindestellen für den Winterbetrieb gerafftes Hagelschutznetz in einer schaubildlichen Darstellung;
- Fig. 2: Verbindungsmittel bestehend aus einem Innenteil und einem Außenteil zur Firstfixierung des Hagelschutznetzes in einer Seitenansicht;
- Fig. 3: die Verbindungsmittel nach Fig. 2 ohne Schutznetz in perspektivischer Ansicht; und
- Fig. 4: eine Fig. 3 entsprechende Darstellung mit hälftig geschnittenem Außenteil.

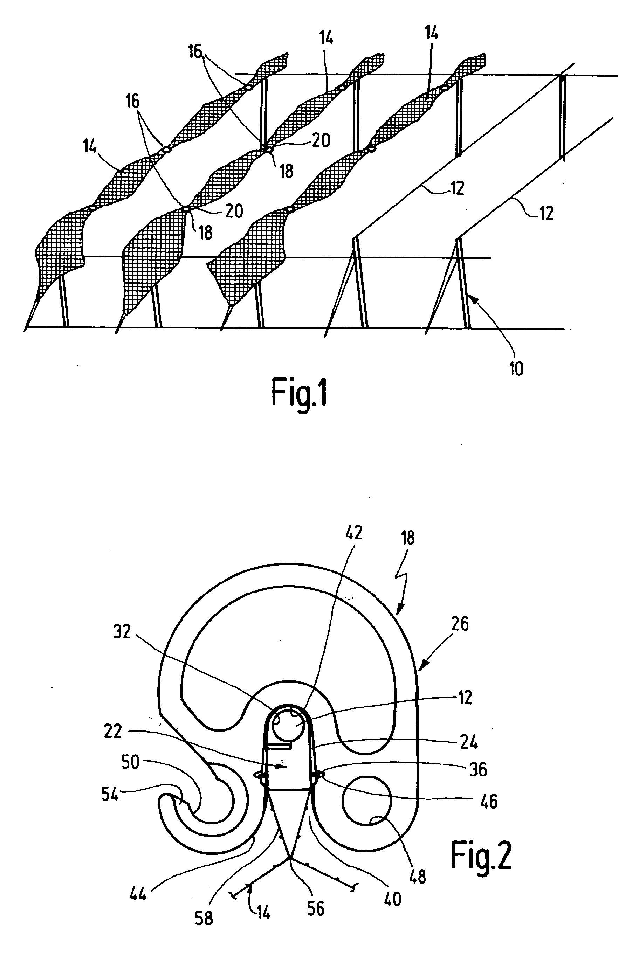

Die in Fig. 1 dargestellte Netzanordnung ist zum Hagelschutz für reihenförmig angeordnete Obstkulturen bestimmt. Sie besteht aus einer Netzunterkonstruktion 10 mit parallel zueinander gespannten Firstdrähten 12, auf welche bahnförmige Schutznetze 14 aufgelegt sind, die an ihren Längsrändern in dachförmiger Anordnung miteinander verbindbar sind. Die Schutznetze 14 sind an im Abstand voneinander angeordneten Bindestellen 16 durch Verbindungsmittel 18 an dem Firstdraht fixiert und dort für den gezeigten Winterbetrieb mittels Bindeseilen 20 gerafft.

Die in Fig. 2 bis 4 näher dargestellten Verbindungsmittel 18 weisen ein den Firstdraht 12 ummantelndes Innenteil 22 und ein unter Zwischenklemmen eines Gewebebereichs 24 des Schutznetzes 14 auf das Innenteil 22 aufclipsbares Außenteil 26 auf.

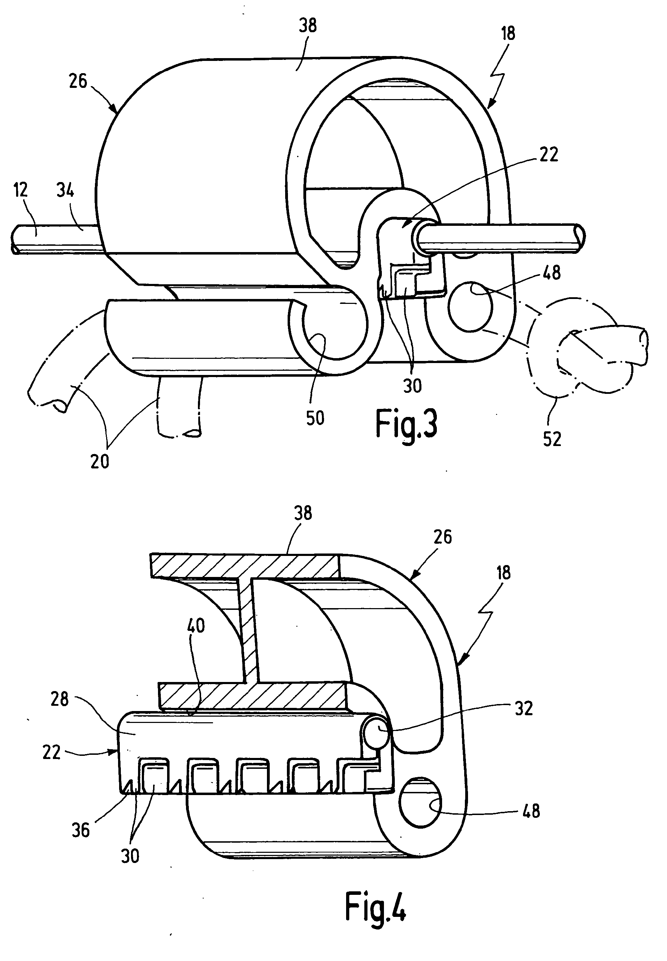

Wie am besten aus Fig. 4 ersichtlich, besteht das Innenteil 22 aus einem klemmend um den Firstdraht 12 umbiegbaren Klemmstreifen 28, der an seinen im umgebogenen Zustand seitlich gegeneinander anliegenden Längsrändern reihenförmig mit Verschlusszähnen 30 versehen ist, welche reißverschlußartig in wechselseitigem Eingriff rastend miteinander verbindbar sind. Dabei kann eine verdreh- und verschiebefeste kraftschlüssige Verbindung zwischen der gebogenen Innenfläche 32 des Klemmstreifens 28 und dem Außenmantel 34 des Firstdrahts 12 geschaffen werden. Zur Verrastung mit dem Außenteil 26 sind am Rücken der Verschlusszähne nach außen abstehende Rastnasen 36 angeformt, welche im Verbindungszustand den Gewebebereich 24 des Schutznetzes 14 durchdringen.

Das Außenteil 26 weist einen zylindrischen Grundkörper 38 auf, der mit einer durchgehenden Aufnahmenut 40 zum radialen bzw. mantelseitigen Aufstecken auf den an dem Firstdraht 12 fixierten Innenteils 22 versehen ist. Die Aufnahmenut 40 besitzt einen C-förmigen Nutgrund 42 und randseitig glatt nach außen gekrümmte Nutflanken 44, um ein das Schutznetz schonendes Aufstecken zu erlauben. Dabei wird unter elastischer Aufweitung der Aufnahmenut 40 eine zusätzliche Klemmkraft auf das Innenteils 22 ausgeübt und somit ein verbesserter Sitz sichergestellt. Um eine sichere Verbindung zwischen Innenteil und Außenteil zu gewährleisten, sind in der Aufnahmenut 40 Rastvertiefungen 46 für den Eingriff der Rastnasen 36 eingeformt. Die Rastnasen 36 können dabei zugleich als Abstandshalter wirken, um den eingeklemmten Gewebebereich 24 des Schutznetzes 14 zu schonen.

Zum Hochraffen des Schutznetzes 14 an den jeweiligen Bindestellen 16 ist das Außenteil 26 mit zwei parallel zur Aufnahmenut 40 durchgehenden Seilkanälen 48, 50 für das um das Schutznetz zu schlingende Bindeseil 20 versehen. Der seitlich geschlossene Seilkanal 48 dient zur Halterung eines hindurchführten und mit Knoten 52 gesicherten Seilendes (Fig. 3). Das andere, ebenfalls verknotete Seilende kann in den seitlich offenen Seilkanal 50 eingeführt werden und dort beispielsweise an einer stufenförmigen Querschnittsverengung 54 (Fig. 1) zugfest gehalten werden. Dabei ist auch ein einfaches Ausfädeln des Bindeseils 20 aus dem Seilkanal 50 möglich, was durch eine am Boden gehende Person gegebenenfalls mittels eines Hilfsstabes vorgenommen werden kann. Auf diese Weise können die an den Firstdrähten 12 hochgerafften Schutznetze 14 ohne Hebetechnik wieder gelöst und für den Sommerbetrieb aufgespannt werden.

Um Seitenbewegungen des Schutznetzes 14 auszuschließen, kann dieses durch eine im Abstand parallel zum Firstdraht 12 verlaufende Firstnaht 56 gesichert werden, wie es in Fig. 1 dargestellt ist. Dabei wird ein Firstsaum oder Umbug 58 gebildet, welcher die zuvor auf dem Firstdraht 12 mit einer geeigneten Klemmzange befestigten Innenteile 22 umhüllt. Die Firstnaht 56 kann mit einer auf dem Firstdraht 12 rollbeweglichen Nähmaschine genäht werden, wobei durch die nur flach auftragenden Innenteile 22 ein gleichmäßiger Nahtverlauf und damit ein gleich bleibender Netzablaufwinkel bei aufgespanntem Schutznetz 14 gewährleistet ist.

## Patentansprüche

1. Vorrichtung zur Firstfixierung eines Schutznetzes (14) für Pflanzenkulturen, mit an einem Firstdraht (12) einer Netzunterkonstruktion (10) im Abstand voneinander angeordneten Verbindungsmitteln (18), wobei die Verbindungsmittel (18) jeweils durch ein den Firstdraht (12) zumindest teilweise ummantelndes Innenteil (22) und ein unter Zwischenklemmen des Schutznetzes (14,24) auf das Innenteil (22) aufsetzbares Außenteil (26) gebildet sind.

2. Vorrichtung nach Anspruch 1, **dadurch gekennzeichnet, dass** das Innenteil (22) an den Firstdraht (12) umfangsseitig ansetzbar und vorzugsweise über eine Klemmverbindung (32,34) verdreh- und verschiebefest mit diesem verbindbar ist.

3. Vorrichtung nach Anspruch 1 oder 2, **dadurch gekennzeichnet, dass** das Innenteil (22) durch einen an seinen Längsrändern reihenförmig mit Verschlusszähnen (30) versehenen Klemmstreifen (28) gebildet ist, wobei die Verschlusszähne (30) des klemmend um den Firstdraht (12) umbiegbaren Klemmstreifens (28) reißverschlussartig miteinander in Eingriff bringbar sind.

4. Vorrichtung nach einem der Ansprüche 1 bis 3, **dadurch gekennzeichnet, dass** das Innenteil (22) vorzugsweise an seinen Verschlusszähnen (30) abstehende Rastorgane (36) aufweist, und dass die Rastorgane (36) unter Durchdringung des Schutznetzes (14) mit dem Außenteil (26) verrastbar sind.

5. Vorrichtung nach einem der Ansprüche 1 bis 4, **dadurch gekennzeichnet, dass** das Außenteil (26) eine durchgehende Aufnahmenut (40) zum Aufstecken auf das an dem Firstdraht (12) befestigte Innenteil (22) aufweist.

6. Vorrichtung nach Anspruch 5, **dadurch gekennzeichnet, dass** die Aufnahmenut (40) beim Einführen des Innenteils (22) unter Ausübung einer Klemmkraft elastisch aufweitbar ist.

7. Vorrichtung nach Anspruch 5 oder 6, **dadurch gekennzeichnet, dass** die Nutflanken (44) der Aufnahmenut (40) randseitig glatt nach außen gekrümmt sind.

8. Vorrichtung nach einem der Ansprüche 5 bis 7, **dadurch gekennzeichnet, dass** die Aufnahmenut (40) einen im Querschnitt C-förmigen Nutgrund (42) aufweist.

9. Vorrichtung nach einem der Ansprüche 1 bis 8, **dadurch gekennzeichnet, dass** das Außenteil (26) über eine Rastverbindung (36,46) mit dem Innenteil (22) verbindbar ist.

10. Vorrichtung nach einem der Ansprüche 5 bis 9, **dadurch gekennzeichnet, dass** die Aufnahmenut (40) des Außenteils (26) mit Rastvertiefungen (46) für den Eingriff von an dem Innenteil (22) abstehenden Rastorganen (36) versehen ist.

11. Vorrichtung nach einem der Ansprüche 1 bis 10, **dadurch gekennzeichnet, dass** zwischen Außenteil (26) und Innenteil (22) das Schutznetz (14) durchgreifende Abstandshalter angeordnet sind.

12. Vorrichtung nach einem der Ansprüche 1 bis 11, **dadurch gekennzeichnet, dass** das Außenteil (26) mit vorzugsweise durch zwei Seilkanäle (48,50) gebildeten Haltemitteln für ein zum Raffen des Schutznetzes (14) vorgesehenes Bindeseil (20) versehen ist.

13. Vorrichtung nach einem der Ansprüche 1 bis 12, **dadurch gekennzeichnet, dass** das Außenteil (26) einen seitlich offenen Seilkanal (50) zur lösbaren Halterung eines Seilendes eines das Schutznetz (14) umschlingenden Bindeseils (20) aufweist.

14. Vorrichtung nach Anspruch 13, **dadurch gekennzeichnet, dass** der seitlich offene Seilkanal (50) eine vorzugsweise stufenförmige Querschnittsverengung (54) zur zugsicheren Abstützung eines Seilknotens des Bindeseils (20) aufweist.

15. Vorrichtung nach einem der Ansprüche 12 bis 14, **dadurch gekennzeichnet, dass** das Bindeseil (20) aus Kunststofffasern besteht.

16. Vorrichtung nach einem der Ansprüche 1 bis 15, **dadurch gekennzeichnet, dass** das Innenteil (22) und/oder das Außenteil (26) als Formteil, insbesondere als Spritzgussteil aus Kunststoff ausgebildet sind.

17. Vorrichtung nach einem der Ansprüche 1 bis 16, **dadurch gekennzeichnet, dass** das Schutznetz (14) einen durch eine im Abstand parallel zu dem Firstdraht (12) verlaufende Firstnaht (56) gebildeten, den Firstdraht (12) und die darauf befestigten Innenteile umhüllenden Firstsaum (58) aufweist.

18. Vorrichtung nach einem der Ansprüche 1 bis 17, **dadurch gekennzeichnet, dass** das Innenteil (22) zumindest in seinem den Firstdraht (12) umschließenden Bereich aus einem Flachmaterial besteht.
